(19) Europäisches Patentamt
European Patent Office
Office européen des brevets

(11) EP 2 752 819 A2

(12) **EUROPEAN PATENT APPLICATION**

(43) Date of publication:
09.07.2014 Bulletin 2014/28

(51) Int Cl.:
*G06T 17/20* (2006.01)

(21) Application number: 13193276.6

(22) Date of filing: 18.11.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 08.01.2013 GB 201300259

(71) Applicant: **Rolls-Royce plc**
**London SW1E 6AT (GB)**

(72) Inventors:
• **Stanley, Felix**
**Derby, DE3 0QG (GB)**
• **Prerapa, Surya Mohan**
**Derby, DE22 3TJ (GB)**

(74) Representative: **Yeomans, Victoria Jane Anora et al**
**Rolls-Royce plc**
**Intellectual Property**
**SinB-38, PO Box 31**
**Derby, Derbyshire DE24 8BJ (GB)**

(54) **Medial surface generation**

(57) A method of generating a medial mesh (70) of an object (42). The method first comprises obtaining a surface mesh (34) of the object (42). Define a set of node normal vectors ($n_n$), each having its origin at a node (46) and being directed towards the interior of the object (42). For each node (46): select a node normal ($n_n$) from the set having their origins at that node (46); define a sphere (60) wherein a surface (62) of the sphere (60) includes the node (46) and the centre point (64) is positioned at a scalar multiple (58) of the node normal ($n_n$); increment the centre point (64) along the scalar multiple (58); iterate until the surface (62) of the sphere (60) includes another node (46) or element (48). The centre point (64) is recorded as a medial point (66) and the diameter as a thickness (68). The medial mesh (70) is generated from the set of medial points (66) and object thicknesses.

FIG. 12

EP 2 752 819 A2

**Description**

The present invention relates to a method of generating a medial surface for an object. In particular, but not exclusively, the method relates to generating a medial surface for a gas turbine engine component, subsystem or engine. It also relates to generating a medial surface for an animation object.

It is known to dimensionally reduce geometry models in order to store and manipulate them more efficiently. 2D geometry can be reduced to a midline and a distance from the midline to the 2D outline. 3D geometry can be dimensionally reduced to a mid-surface or medial surface and a thickness of the geometry. From this information the full geometry can be recreated when necessary.

The process of dimensionally reducing geometry is non-trivial. Well known techniques include Medial Axis Transforms, Chordal Axis Transforms, Face Pairing and Level Sets. For 3D geometry the generation of midsurfaces generally relies on Voronoi decomposition or Delaunay tetrahedralisation. These techniques typically take a long time to update geometry and are therefore inappropriate for real-time analysis or for use in design phases where multiple designs are to be analysed and compared.

Commercially available algorithms implementing known techniques require parallel surfaces, closed volume geometry or both. Closed volume geometry means that each edge must precisely join an adjacent edge at a vertex without even a small gap. In practical industrial applications it is rare to achieve such geometry. Indeed it has been shown that geometry produced by computer aided design (CAD) may be solid geometry but does not result in guaranteed closed volume when converted into a mesh through Voronoi decomposition, Delaunay tetrahedralisation or other process.

Known techniques are also generally ineffective in thick regions of a modelled object. Known techniques tend to produce significant numbers of branches on the mid-surface. These have the effect of changing the mass and stiffness of the modelled component or object which thus distorts the dynamics of the component. Additional processing is therefore required before analysis can be conducted.

The present invention provides a method of generating a medial surface that seeks to address the aforementioned problems.

Accordingly the present invention provides a method of generating a medial mesh of an object, the object having an interior; the method comprising steps to:

obtain a surface mesh of the object comprising elements whose vertices are nodes;
define a set of node normal vectors, each node normal having its origin at a node and being directed towards the interior of the object;
for each node:

i) select a node normal from the set of node normals having their origins at that node;
ii) define a sphere wherein a surface of the sphere includes the node and wherein a centre point of the sphere is positioned at a scalar multiple of the node normal;
iii) increment the centre point along the scalar multiple of the node normal;
iv) iterate steps ii) and iii) until the surface of the sphere includes another node or element;
v) record the centre point of the sphere as a medial point and the diameter of the sphere as a thickness;
vi) repeat steps i) to v) for each node normal from the set of node normals having their origins at that node; and

generate a medial mesh from the set of medial points and record object thickness from the set of thicknesses.

Advantageously, the method of the present invention generates a medial mesh quickly, accurately and repeatably even where the object or its solid geometry does not have parallel surfaces or closed volume.

The method may comprise a further step to manipulate the medial mesh. Advantageously other geometries may be tested in this way.

The method may comprise a further step to recreate the surface mesh or object geometry from the medial mesh and the object thickness. Advantageously, no information is lost by the method of the present invention and so the surface mesh or object geometry can be recreated exactly.

The third step of the method may be performed in parallel for at least a subset of the nodes. Advantageously, the method of the present invention is therefore quicker than conventional methods.

The surface mesh may be at least partially disjointed. The surface mesh may be at least partially nonconformal. Advantageously, the method of the present invention successfully generates a medial mesh of the object in these cases.

The first step of the method may include determining element normals directed outside the object. Each node normal may be parallel to an element normal and be directed towards the interior of the object. Advantageously, known methods of generating a surface mesh often generate the element normals.

The method may comprise a further step to set the number of node normals such that: a surface node comprises one node normal; an edge node comprises two node normals; and a vertex node comprises three node normals. A vertex node may alternatively be called a corner node. The method may comprise a further step to classify the edge nodes and vertex nodes such that: an edge node or vertex node for which all the node normals cross in the interior of the object is a convex node;

an edge node or vertex node for which all the node normals cross outside the object is a concave node; and a vertex node for which two of the node normals cross in the interior of the object and two of the node normals cross outside the object is a convex-concave node.

For each edge node or vertex node, the third step of the method may comprise additional steps between steps iv) and v) to:

vii) increment the centre point position further along the scalar multiple of the node normal;

viii) project a new node from the centre point position to a nearest surface mesh element;

ix) perform steps ii) to iv) from the new node; and

x) iterate steps vii) to ix) until a sphere of maximal diameter is found.

Advantageously, the additional sub-steps enable the maximal spheres to be found from each edge node or vertex node.

The step iii) may comprise steps to: calculate a distance between the centre point and a nearest surface mesh element; sum the distance calculated and the previous radius; halve the sum; and set the result as a new radius. Advantageously, this is a simple method of incrementing the centre point position.

The step iv) may comprise iterating until the surface of the sphere is within a tolerance threshold of including another node or element. Advantageously, this means that the surface of the sphere need not precisely meet another surface mesh for the iteration to finish and therefore reduces the processing time and resource requirements.

The surface mesh may comprise 3-dimensional or 2-dimensional geometry. Advantageously, the same method can be applied for either or to a mixture of both.

The object may comprise any one of the group comprising: a component; a sub-system; a gas turbine engine; an animation object.

The first step of the method may comprise deriving the surface mesh from the object or looking up the surface mesh from a reference source.

The present invention also comprises a computer program having instructions adapted to carry out the method; a computer readable medium, having a computer program recorded thereon, wherein the computer program is adapted to make the computer execute the method; and a computer program comprising the computer readable medium.

Any combination of the optional features is encompassed within the scope of the invention except where mutually exclusive.

The present invention will be more fully described by way of example with reference to the accompanying drawings, in which:

Figure 1 is a sectional side view of a gas turbine engine.

Figure 2 is a schematic perspective view of a component.

Figure 3 is a schematic perspective view of a surface mesh representation of the component of Figure 2.

Figure 4 is a schematic perspective view of a disjointed surface mesh.

Figure 5 is a schematic perspective view of a nonconformal surface mesh.

Figure 6 is a schematic view of a surface mesh.

Figure 7 is a schematic perspective view of parts of a component showing node types.

Figure 8 is a perspective view of part of a component in surface mesh representation.

Figure 9 shows the first step of the method of the present invention in relation to the part of the component of Figure 8.

Figure 10 shows subsequent steps of the method of the present invention in relation to the part of the component of Figure 8.

Figure 11 shows completion of the third step of the method of the present invention in relation to the part of the component of Figure 8.

Figure 12 is a perspective view of the medial surface generated for the component of Figure 2.

Figure 13 shows sub-steps of the third step of the method of the present invention.

Figure 14 is a schematic view of a two-dimensional component having a medial line generated according to the method of the present invention.

Figure 15 is an example of geometry reduction.

Figure 16 is a perspective illustration of an animation object and its surface mesh representation.

Figure 17 is a perspective illustration of the animation object of Figure 16 after manipulation.

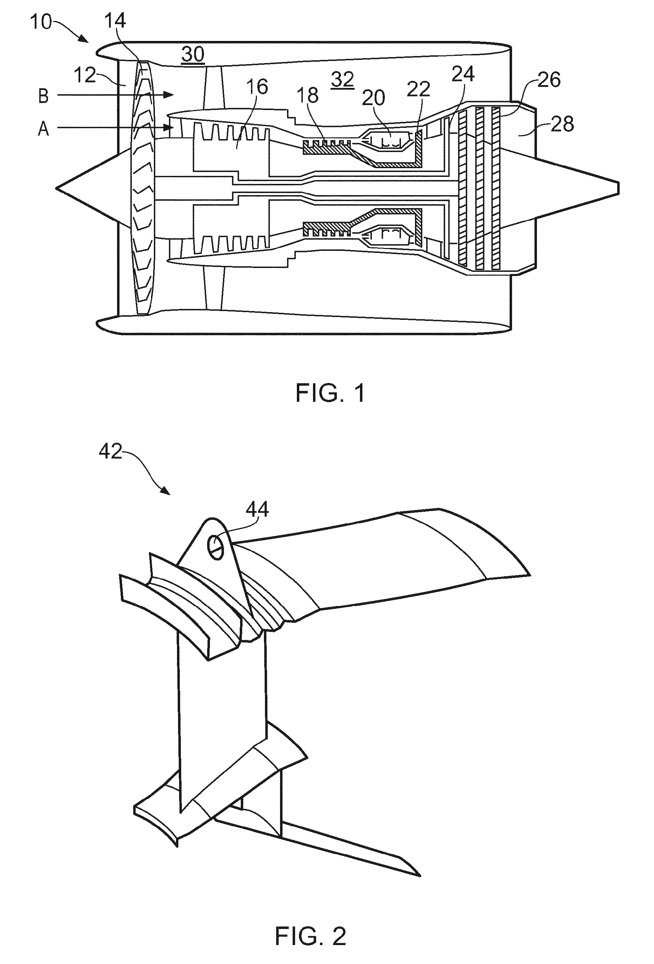

A gas turbine engine 10 is shown in Figure 1 and comprises an air intake 12 and a propulsive fan 14 that generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. A nacelle 30 surrounds the gas turbine engine 10 and defines, in axial flow B, a bypass duct 32.

The present invention finds utility in efficiently modelling whole engine geometry. It also finds utility in modelling subsystems or components within the gas turbine engine 10.

The method of the present invention will be described with respect to a 3D gas turbine engine component whose surface forms a substantially closed volume. One such component is the rear mount structure 42 for a gas turbine engine 10, shown in Figure 2. Forming a substantially closed volume does not preclude the component comprising one or more apertures 44, which are treated by the method as additional edges as will become apparent.

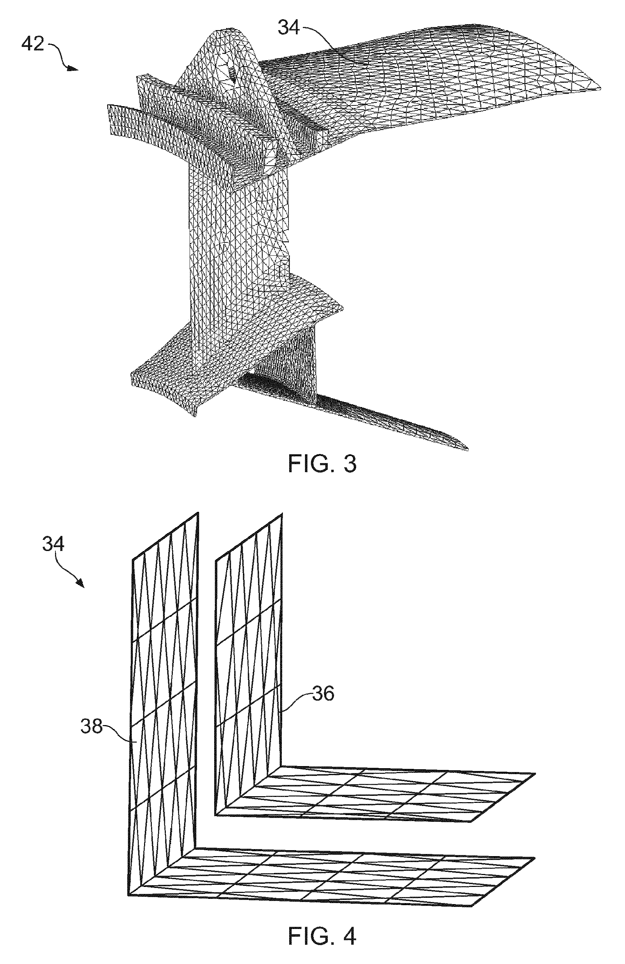

The first step of the method comprises obtaining a surface mesh 34 of the object for which the medial surface is to be generated, as shown in Figure 3. This can be derived using any known method or looked up from a reference source having been previously generated. The surface mesh 34 comprises finite elements which are triangular, although meshing with a different shape element is also known. The surface mesh 34 may be disjointed, as illustrated in Figure 4, such that parts of the mesh 36 are not connected to any other part of the mesh 38. Known techniques are unable to generate medial surfaces where the surface mesh 34 is as illustrated in Figure 4 but the method of the present invention can generate a medial surface, providing advantages to users.

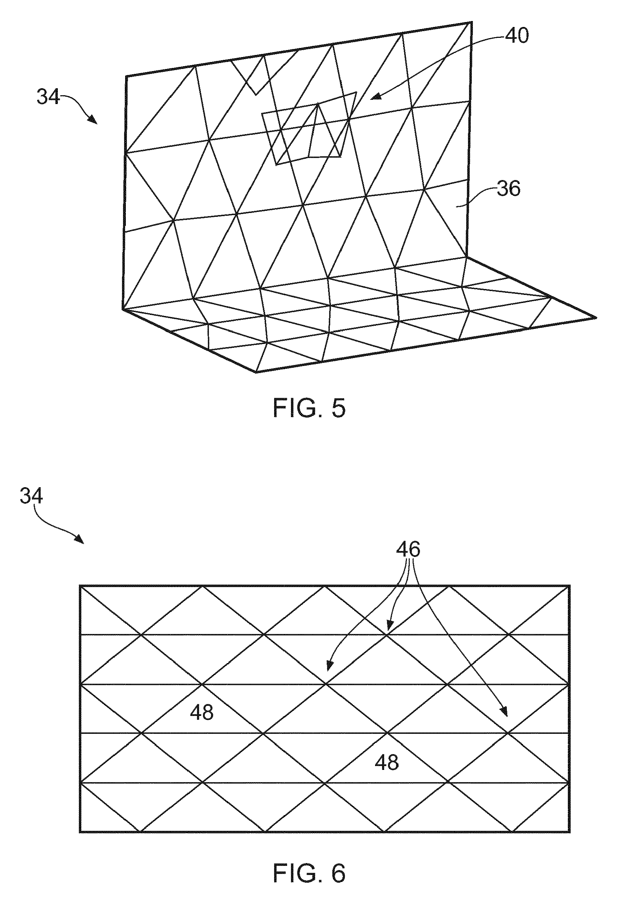

Similarly the method of the present invention is also effective where the surface mesh 34 is non-conformal, as illustrated in Figure 5. Conformal means that each element in the mesh is connected to other elements in the same manner; thus each edge borders exactly two triangles and no element encloses a node which is not one of its vertices. Non-conformity 40 does not meet this definition. A non-conformal mesh is generated where two surfaces are overlaid but not connected.

Part of the surface mesh 34 is shown in Figure 6. It comprises nodes 46 at the vertices of the elements 48, the elements 48 being triangular. For each element 48 the element normal vector $n_e$ can be calculated. The element normal $n_e$ is perpendicular to the plane of the element 48 and extends away from the interior of the component 42. For the method of the present invention the reversed element normal vector $n_r$ is used. This is the vector which is perpendicular to the plane of the element 48 and extends into the interior of the component 42.

Each node 46 has a type as follows. Where a node 46 is located at an edge of the component 42 it is an edge node 46e. An edge is defined as a place where two adjacent elements 48 meet at a line with an included angle greater than 15°. Where a node 46 forms a corner of the component 42 it is a corner node 46c. A corner is defined as a place where more than two adjacent surfaces meet at a point with all included angles greater than 15°. Where a node 46 does not form an edge or a corner of the component 42 it is a surface node 46s.

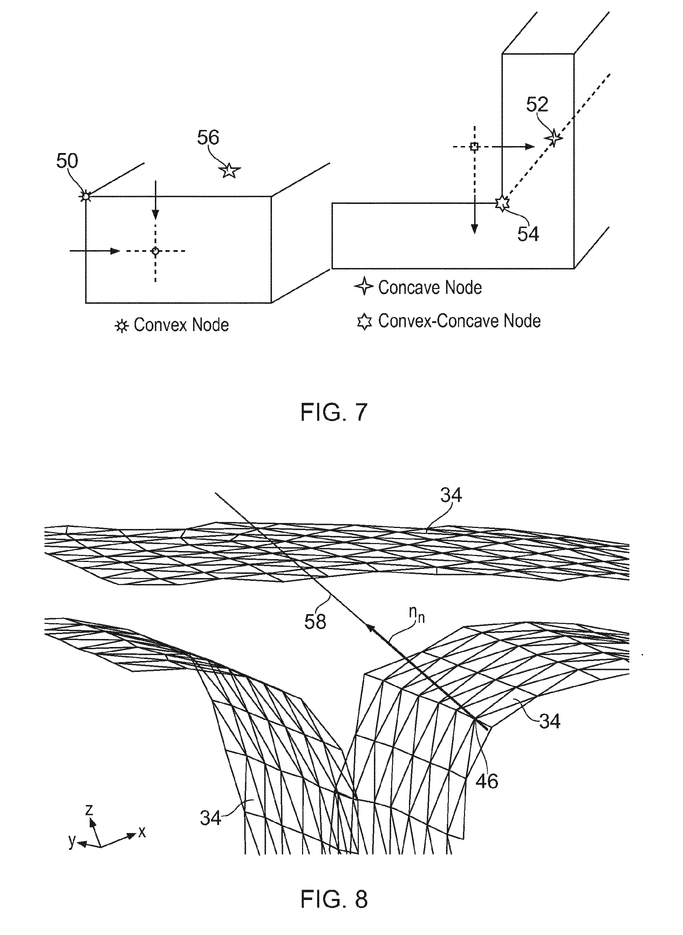

Each edge node 46e and corner node 46c can be classified depending on the reversed normals $n_r$ of each of the elements 48 of which it is a vertex. Exemplary classified nodes 46 are shown in Figure 7. Where the projections of all the adjacent reversed normals $n_r$ meet inside the component 42, the node 46 is a convex node 50. Convex nodes 50 occur along edges of components 42 where the included interior angle is less than 180°. Convex nodes 50 also occur at corners of components 42 where all the included interior angles are less than 180°. Where the projections of all the adjacent reversed normals $n_r$ meet outside the component 42, the node 46 is a concave node 52. Concave nodes 52 occur along edges of components 42 where the included interior angle is greater than 180°. Concave nodes 52 also occur at corners of components 42 where all the included interior angles are greater than 180°. Where the projections of at least two of the adjacent reversed normals $n_r$ meet inside the component 42, and the projections of at least two of the adjacent reversed normals $n_r$ meet outside the component 42, the node 46 is a convex-concave node 54. Convex-concave nodes 54 occur at corners of components 42 where the included interior angles in one plane are less than 180° and the included interior angles in another plane are greater than 180°.

The second step of the method comprises defining a set of node normal vectors $n_n$. Each node 46 has at least one node normal $n_n$; the number of node normals $n_n$ for each node 46 being determined by its type. Thus a surface node 46s has one node normal $n_n$, an edge node 46e has two node normals $n_n$, and a corner node 46c has three node normals $n_n$. Each node normal $n_n$ is parallel to the reversed normal $n_r$ of an adjacent element 48 and extends from the node 46 as origin.

The third step of the method comprises performing a series of sub-steps for each node 46. Advantageously, the sub-steps for one node 46 can be performed in parallel for another node 46 so that the result of the third step is reached more quickly than former methods where the steps had all to be performed in series. Consequently the medial mesh resulting from the method is obtained quickly.

Figure 8 shows part of a component 42 comprising three partial surface meshes 34. One of the surface nodes 46s is indicated, with its node normal $n_n$. The line 58 is a projection of the node normal $n_n$. The line 58 thus comprises all the points that are scalar multiples of the node normal $n_n$.

The first sub-step of the method comprises selecting one of the node normals $n_n$ with its origin at that node 46. Where the node 46 is a surface node 46s, the first sub-step selects the only node normal $n_n$. However, where the node 46 is an edge node 46e or a corner node 46c, the first sub-step selects one of the two or three node normals $n_n$.

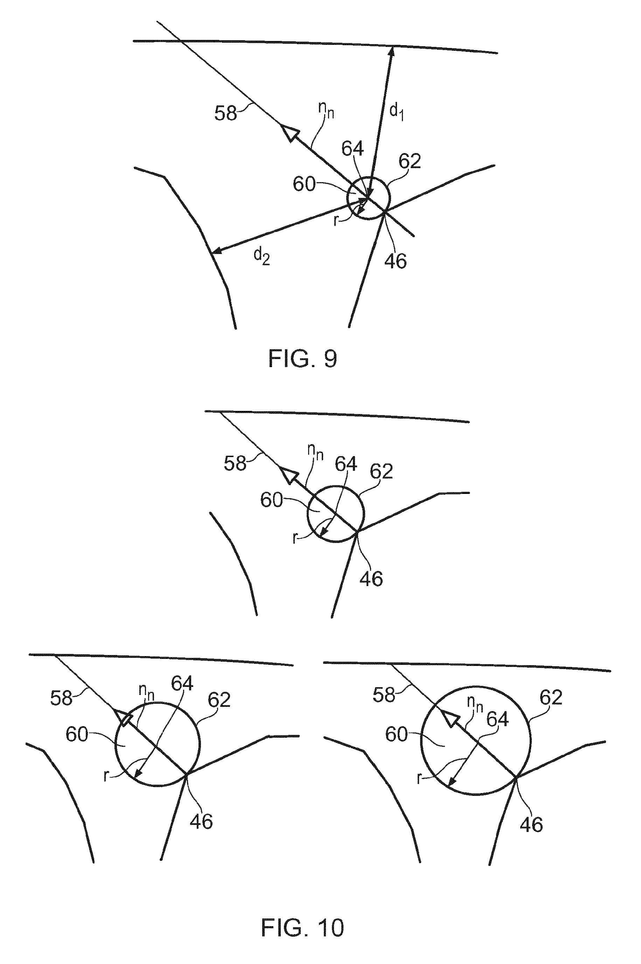

The second sub-step is illustrated with respect to Figure 9 and comprises defining an initial sphere 60. The sphere 60 is arranged to include the surface node 46s on its surface 62 and to have its centre point 64 positioned on the node normal $n_n$ or its projection 58. The initial sphere 60 has a radius r which can be any real number.

The method of the present invention then tests to determine whether the surface 62 of the sphere 60 touches another surface mesh 34 of the component 42. If it does not, the method continues.

The third sub-step is illustrated with respect to Figure 10. The centre point 64 of the sphere 60 is incremented along the node normal $n_n$ or its projection line 58. Preferably the centre point 64 position is incremented in the following manner. A set of distances are calculated between the centre point 64 of the sphere 60 and each of a set of elements 48 or nodes 46 on surfaces meshes 34 towards which the sphere's surface 62 extends. Two such distances $d_1$ and $d_2$ are illustrated in Figure 9. The shortest of these distances d is selected. The absolute value of the scalar difference between the shortest distance d and the radius r of the sphere 60 is computed and compared to a pre-determined tolerance threshold. If the difference is greater than the tolerance threshold the centre point 64 of the sphere 60 is incremented by increasing the radius to half the sum of the previous radius and the shortest distance; that is:

$$r_{i+1} = \frac{(r_i + d)}{2}$$

where $r_i$ is the previous radius and $r_{i+1}$ is the incremented radius.

Again the surface 62 of the sphere 60 is tested to ascertain whether it includes a node 46 or element 48 from another surface mesh 34 of the component 42. The test is met if the difference calculated above is less than or equal to the tolerance threshold. Advantageously, the incrementing strategy is guaranteed to converge so that the surface 62 of the sphere 60 will include a node 46 or element 48 from another surface mesh 34 of the component 42 after a number of iterations.

The fourth sub-step of the method comprises iterating the second and third sub-steps of the method until the surface 62 of the sphere 60 does include a node 46 or element 48 from another surface mesh 34 of the component 42. Thus the centre point 64 is incremented along the node normal $n_n$ or its projection line 58 whilst forcing the surface 62 of the sphere 60 to contain the origin node 46. Then the sphere 60 is tested to ascertain whether it is within the pre-defined tolerance distance of the nearest surface mesh 34. Iteration continues until the surface 62 includes, within the pre-defined tolerance, another node 46 or element 48 in addition to the origin node 46. Sequential steps of the iteration are shown in Figure 10. As will be apparent to the skilled reader, there may be more than one surface mesh 34 to which the surface 62 of the sphere 60 is advancing, as in the example illustrated in Figure 9 and Figure 10. It is therefore necessary to calculate the distance from the surface 62 of the sphere 60 to each surface mesh 34 and to take the shortest of those distances as the one to compare to the pre-defined tolerance. It may be the case that the shortest distance is initially to one of the other surface meshes 34 but subsequently switches to a different one of the other surface meshes 34 as the sphere 60 grows along the direction of the node normal $n_n$ and its projection line 58.

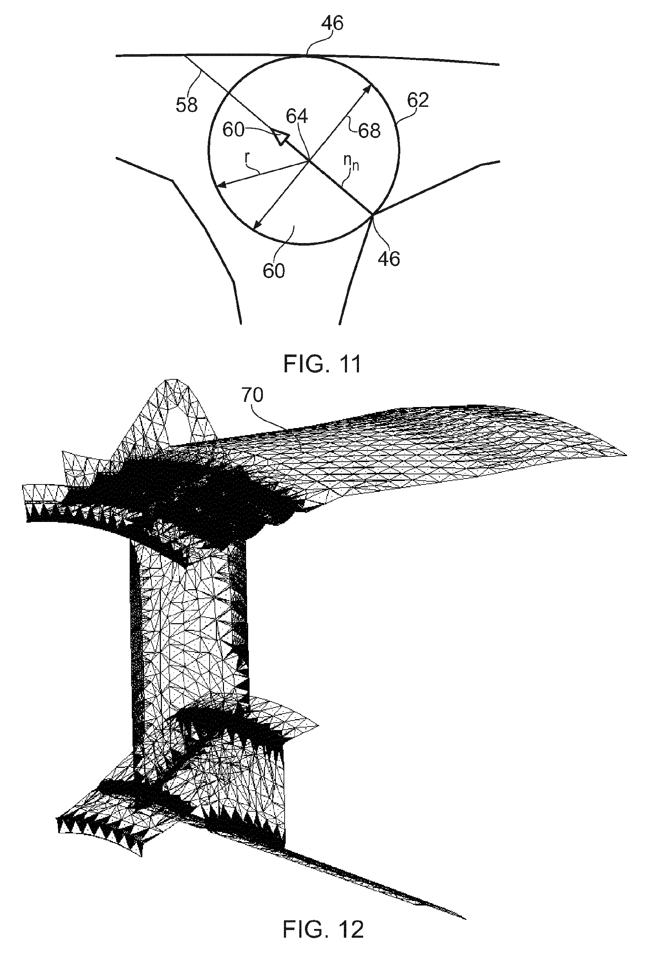

When the surface 62 of the sphere 60 includes another node 46 or element 48, as shown in Figure 11, the iteration finishes. In the fifth sub-step of the method the centre point 64 of the final sphere 60 is recorded as a medial point 66 because it is midway between the two nodes 46 captured on the surface 62 of the sphere 60.

The diameter of the final sphere 60 is recorded as thickness 68.

The sixth sub-step of the method applies for edge nodes 46e and corner nodes 46c. The first five sub-steps of the third step of the method are repeated for each additional node normal $n_n$ originating at the node 46 under review. Thus the third step of the method results in one medial point 66 and thickness 68 for a surface node 46s, two medial points 66 and thicknesses 68 for an edge node 46e and three medial points 66 and thicknesses 68 for a corner node 46c.

Thus at the conclusion of the third step of the method a record has been produced of the medial point 66 and thickness 68 resulting from each node normal $n_n$. The fourth and final step of the method of the present invention comprises generating a medial mesh 70 from the set of medial points 66. The medial mesh 70 of component 42 is shown in Figure 12. The medial mesh 70 has no thickness but extends through three-dimensions in a simulacrum of the component 42. Associated with each medial point 66 is the component thickness 42 at this location, expressed as a scalar, which is the diameter of the sphere 60. Thus the object thickness is comprised of the set of thicknesses 68. Optionally a medial surface 71 can be generated from the medial mesh 70.

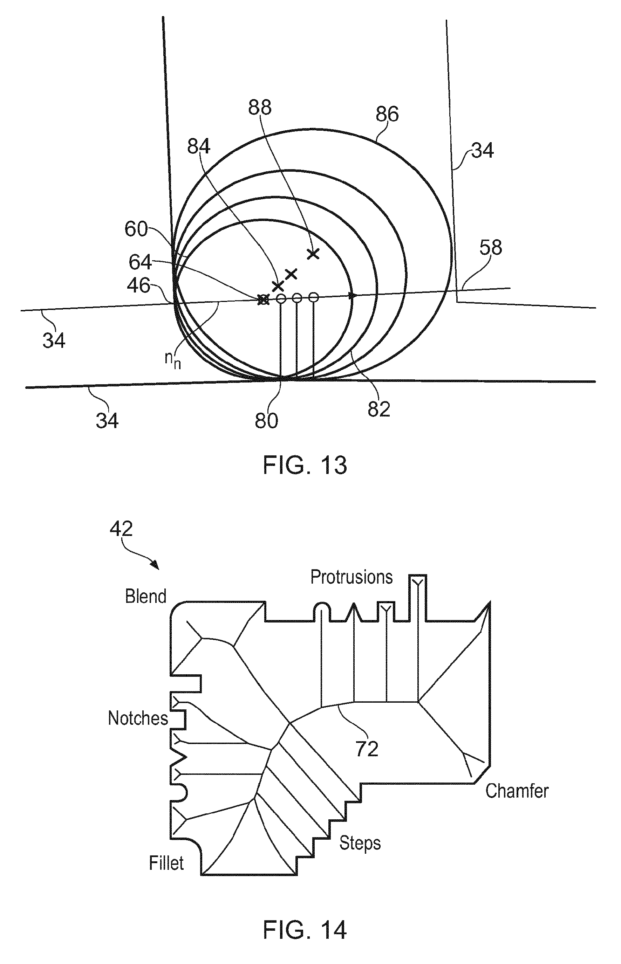

A refinement of the method of the present invention adds steps between the fourth and fifth sub-steps for edge nodes 46e and corner nodes 46c. For an edge node 46e or corner node 46c the first five sub-steps of the third step of the method comprise selecting one of the two or three node normals $n_n$ and growing a sphere 60 that includes the origin node 46 and has its centre point 64 on the node normal $n_n$ until the surface 62 of the sphere 60 includes a node 46 or element 48 from another surface mesh 34 of the component 42. However, in the case of edge nodes 46e and corner nodes 46c this may not be the maximal sphere 60 as can be seen in Figure 13. The sphere 60 touches, within the tolerance, the origin node 46 on the left-hand surface mesh 34 and the bottom surface mesh 34 but does not touch the right-hand surface mesh 34.

The first additional sub-step comprises incrementing the position of the centre point 64 further along the node normal $n_n$ or its projection line 58 by a pre-defined increment factor λ. For example, an increment factor λ of 0.25 is advantageous in some applications. From this incremented centre point 64 a new node 80 is projected onto the nearest mesh element 48, which may be on the surface met by the sphere 60. This is the second additional sub-step. The third additional sub-step comprises performing the second, third and fourth sub-steps of the method to initialise and grow a sphere 60 from the new node 80. The new sphere 82 has centre point 84. The new sphere 82 is thus constrained to contain the new node 80 on its surface 62 but not to contain the origin node 46, and will therefore meet the original surface mesh 34 close to but not at the origin node 46. The radius of the new sphere 82 is compared to the radius of the sphere 60 grown from the origin node 46. If the new sphere 82 has a larger radius than the original sphere 60, the first, second and third additional sub-steps are iterated. Thus the centre point 64 is incremented further along the original node normal $n_n$ by the increment factor $\lambda$, a new node 80 is projected to the nearest mesh element 48, which may be on the surface met by the original sphere 60, and a new sphere 82 is grown.

The iteration finishes when the sphere 86 of maximal diameter is found. As can be seen in Figure 13, this sphere 86 meets all three surface meshes 34. Practical implementations of the additional sub-steps of the method will compare the radius of the new sphere 82 with the radius of the previous sphere at each iteration to determine if the radius of the new sphere 82 is larger than the previous radius. At the iteration when the radius of the new sphere 82 is smaller than the radius of the previous sphere the latest projected node 80 is rejected in favour of the previous projected node 80. The new sphere 82 grown from that projected node 80 may be deemed to be the maximal sphere 86. The increment factor $\lambda$ is preferably set to be small so that the method finds the maximal sphere 86 and does not stop iterating at a saddle point. Alternatively, the increment factor $\lambda$ may be halved and the distance between the previous projected node 80 and the rejected node 80 be investigated in like manner. Advantageously, the method of halving the increment factor $\lambda$ is unconditionally convergent.

Thus the fifth sub-step of the third step of the method records the maximal centre point 88 as the medial point 66 and the diameter of the maximal sphere 86 as the thickness. As will be apparent, the iteration loop at the sixth sub-step of the method will encompass the iteration loop within the additional sub-steps. Thus maximal spheres 86 are searched in the direction of each node normal $n_n$ originating from the originating edge node 46e or corner node 46c. In some cases the sphere 60 will be the maximal sphere 86, in which case the additional sub-steps are performed only once and the new sphere 82 discarded because its radius is smaller than the radius of the sphere 60.

Advantageously, analysis on the medial mesh 70 is easier and less computationally intensive than on the full solid geometry of the component 42. Such analysis may comprise modal analysis to determine natural and forced frequencies of the component, or thermo-mechanical analysis to determine displacement of the component due to thermal expansion and mechanical loads. A further advantage arises from the thickness 68 at each medial point 66. Since this information is recorded, it is possible to recreate the solid geometry of the component 42 without loss of information. The method of the present invention therefore provides an effective and efficient method of dimensionally reducing complex geometry which is reversible because it is without loss of information.

Beneficially the underlying topology of the component 42 can be manipulated easily by changing the topology of the solid geometry of the component 42 and reapplying the method of the present invention. Advantageously, changing the topology in the solid geometry allows additional constraints to be applied, such as maintaining the spatial position of one surface of the component 42 relative to another. This is important when the component 42 comprises a component in the gas path of a gas turbine engine 10, for example, so that the gas path dimensions are not altered by topology optimisation. In some applications, it may be possible to recalculate the medial mesh 70 for only those portions of the geometry of the component 42 which have changed. Alternatively, the location of the medial points 66 and/or the thicknesses 68 associated with the medial points 66 may be changed instead of the solid geometry topology. This is advantageous in animation applications of the method of the present invention, as described below, where there are fewer topology constraints. Either of these manipulations enables rapid optimisation of the component topology.

Figure 14 illustrates a two-dimensional component 42 to which the method of the present invention has been applied to generate the medial line 72, also known as the medial axis; that is the two-dimensional equivalent to the medial surface 70 discussed with respect to the earlier figures. As is apparent from Figure 14, the method of the present invention produces a medial line 72 that is free from extraneous branches along edges of the component 42, particularly at complex edge features such as notches, steps, fillets, protrusions and chamfers. This is an improvement over known methods of generating medial lines 72 and medial surfaces 70 which typically generate significant branches which must be manually pruned from the resultant medial lines 72 or medial surfaces 70 so as not to introduce stiffness and/or mass relative to the modelled component 42.

Advantageously, because the method of the present invention can be used in two dimensions or in three dimensions, medial mesh 70 generation can be speeded up further for axisymmetric components 42 by taking a 2D cross-section, applying the method of the present invention to produce the medial lines 72 and then extruding them in the direction of the axis of symmetry.

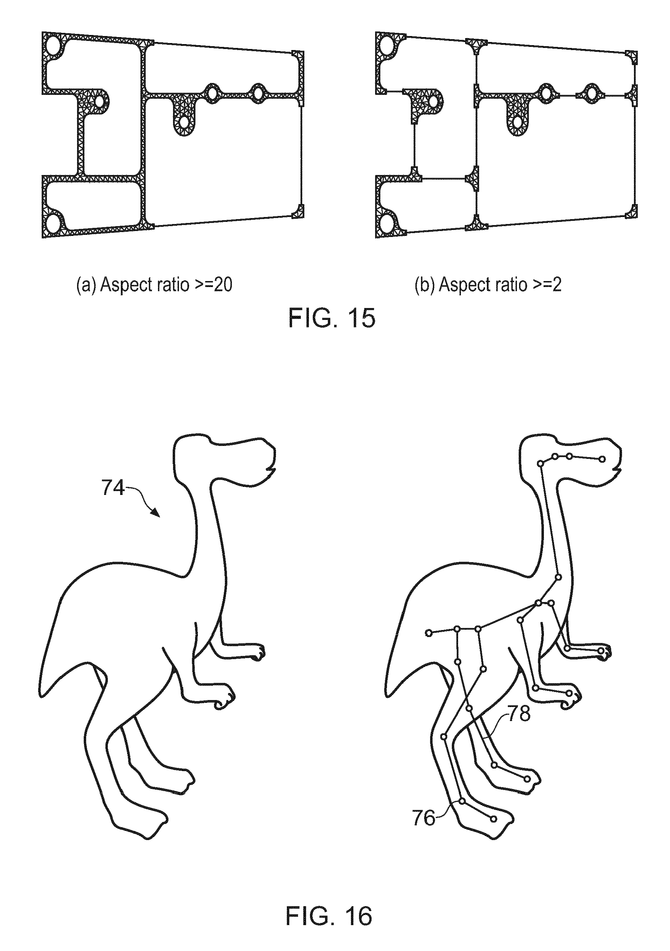

Figure 15 illustrates a similar principle for a 2D component 42, which may be a cross-section of a 3D component 42. The method of the present invention is applied to generate the medial mesh 70 and thickness 68 of the component 42. Then a thickness threshold is defined. For sections of the component 42 having thickness greater than or equal to the threshold, the 2D shell is retained, as shown by the shaded portions. However, for sections of the component 42 having thickness less than the threshold, a 1D beam is retained instead as an approximation, as shown by the line portions. The left-hand component 42 has a threshold of 20 units, for example 20mm, and therefore retains most of the component 42 as a 2D shell. Conversely, the right-hand component 42 has a threshold an order of magnitude smaller, just 2 units, and therefore retains little of the component 42 as a 2D shell and approximates the rest of it by 1D beams. The threshold can be set as appropriate dependent on the speed, storage and efficiency required for a particular application of the method of the present invention.

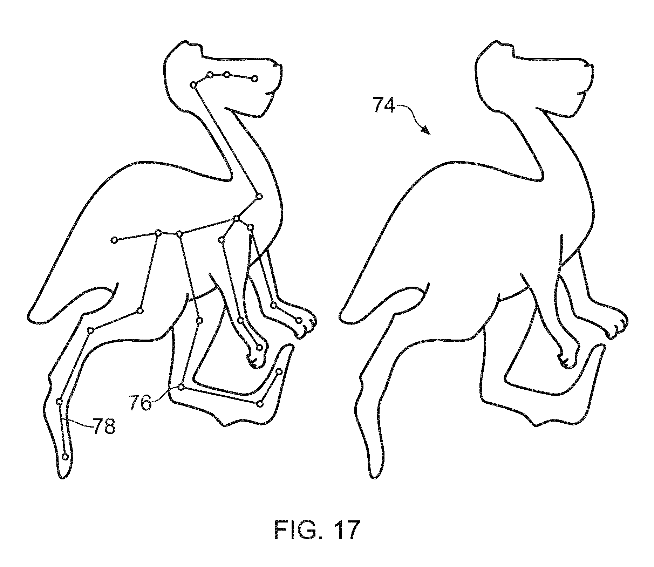

The method of the present invention has been described with respect to a geometric component 42. Figure 16 and Figure 17 illustrate the use of the method for dimensionally reducing an animation object, dinosaur 74. Using the method of the present invention, the surface mesh 34 is determined and thence the medial points 66 as seen in the second picture of Figure 16. In an optional additional step, a subset of the medial points 66 are chosen as manipulation points 76. The manipulation points 76 are joined together by interpolation lines 78; that is, lines that join a pair of manipulation points 76 and are within the interior of the component 42. Alternatively, the medial points 66 forming the medial mesh 70 are used as the manipulation points 76 and the interpolation lines 78 are the lines joining medial points 66 into the medial mesh 70.

In a further step of the method one or more of the manipulation points 76 is moved which causes those connected to it by interpolation lines 78 to move also. The result of a manipulation of this sort is shown in Figure 17. The movement may cause an interpolation line 78 to pass outside the component 42 but all the manipulation points 76 remain in the interior of the component 42.

In a subsequent step of the method, the surface mesh 34 and thence the solid geometry of the animation object 74 is reconstructed using the medial points 66 and the thicknesses 68. The reconstructed and manipulated dinosaur 74 can be seen in the second picture in Figure 17. Advantageously manipulation of the dimensionally reduced medial surface 70 is significantly less computationally intensive and so animation of complex animation objects 74 is feasible by using the method of the present invention.

The same principle can be applied to the manipulation of geometric components 42. Advantageously, several variants of the geometry can be tested quickly and easily by manipulating the medial surface 70 produced using the present invention, for design iteration. For example, a complex model of a gas turbine engine 10 using three-dimensional elements may take approximately 10 to 15 hours to solve; that is, to analyse displacements in the engine due to thermo-mechanical and pressure loading, and to output results. By using the method of the present invention to dimensionally reduce the model, the time taken is reduced to a few hours to build because it is done automatically, and a few minutes to solve.

The method of the present invention is preferably encompassed in computer-implemented code and stored on a computer-readable medium. It is thus a computer-implemented method of generating a medial mesh of an object, such as component 42 or animation object 74. The method may be implemented on a basic computer system comprising a processing unit, memory, user interface means such as a keyboard and/or mouse, and display means.

Advantageously, the medial mesh 70 is produced automatically and repeatably by the method of the present invention whereas the previous methods required a skilled mesher to manually create the medial mesh 70 which was unique to the mesher and therefore not repeatable.

Optionally additional edge nodes 46e may be generated to ensure a sufficient density or regularity of medial points 66 are generated by the method of the present invention. Any method known to the skilled reader may be used to add such edge nodes 46e. For example the distance along the edge between two extant edge nodes 46e may be bisected and a new node 46 added at this position. In particular, new medial points 66 are generated between the centre points 88 of maximal spheres 86 originating from an origin node 46. For example, the vector between two centre points 88 is populated by evenly distributed points spaced apart by the thickness of the smaller of the maximal spheres 86. Then these points are projected onto the nearest surface mesh 34, spheres 60 grown and the centre points 64 recorded as medial points 66. This ensures that the medial mesh 70 produced is smooth and hole-free so that it is suitable for analysis such as finite element analysis.

The method of the present invention is beneficial because it provides a method of generating a medial mesh 70 from a surface mesh 34 of a component 42 that is robust to poorer quality input models. It is also beneficial because it can be partially processed in parallel and is therefore quicker by orders of magnitude than known methods. Furthermore, it beneficially dimensionally reduces models without losing information so that the original model can be reconstructed when needed. The method increases the number of spheres 60 that are grown at positions of the component 42 or animation object 74 where the geometry changes, because spheres 60 are grown in the direction of each node normal $n_n$ of which there are more for edge nodes 46e and corner nodes 46c, thereby adapting the computational effort automatically for the complexity of particular features. The method is an improvement over known methods because it generates medial meshes 70 for thick sections of a component 42 or animation object 74 better since the spheres 60 can be grown to any size required.

Advantageously the medial meshes 70 do not comprise branches at the edges of the component 42 or animation object 74. This means that the dimensionally reduced model accurately reflects mass, centre of gravity and stiffness of the modelled component 42 or animation object 74 and thus can be used for analysis of these parameters. Known methods either could not be used for such analysis or required significant manual pruning of branches before they could be used, which increases the time and cost associated with producing the model and means that only an expert user could apply desirable analysis to the models produced. Indeed, in some cases the inaccuracy in mass and stiffness given by previous methods made them ineligible for analysing complex components 42 or animation objects 74 at all. The method of the present invention therefore enables non-expert users to produce medial meshes 70 of components 42 or animation objects 74 and to run analysis of the medial meshes 70 without further processing them first.

The method of the present invention enables design optimisation of components 42 by reducing the time and cost of building, updating and analysing models multiple times.

The method may be used to generate the medial mesh 70 of a component 42, such as an aerofoil for a gas turbine engine 10. Alternatively it may be used to generate the medial mesh 70 of a sub-system of components, such as a rotor stage of a gas turbine engine. It may even be used to generate the medial mesh 70 of a whole complex system, such as a gas turbine engine in its entirety. It therefore has applications in supplying suitable models for computational fluid dynamics analysis. It may also supply suitable models for stress analysis where the modelled component 42 is thin and/or smooth so that artificial fillets are not created. For example, stress analysis would be suitable for components 42 such as a car body or aeroplane fuselage.

The method of the present invention may be used to dimensionally reduce a model where the component 42 or animation object 74 is a mixture of two-dimensional and three-dimensional sections.

The elements forming the medial mesh 70 generated by the method may be extruded in both directions away from the medial mesh 70 to form a mesh of hexahedral elements.

In another aspect of the third sub-step of the third step of the method of the present invention, an increment factor $\lambda$ is used to define the speed of convergence of the sphere 60 to another node 46 or element 48 on another surface mesh 34 of the component 42. In this case the shortest distance d between the surface 62 of the sphere 60 and the surface mesh 34 towards which the sphere 60 is grown is calculated. Then the difference D between this shortest distance and the radius r of the sphere 60 is calculated. The difference is multiplied by the increment factor $\lambda$, which is also called a relaxation factor, and the result is added to the radius, so $r_{i+1}=r_i+\lambda(D-r_i)$, thereby moving the centre point 64 along the node normal $\underline{n_n}$ or its projection line 58. The relaxation factor $\lambda$, or increment factor, is pre-defined and takes a value between zero and one. Formally, the relaxation factor $\lambda$ is in the range $0<\lambda\leq1$. When the relaxation factor $\lambda$ is closer to 0 the spheres 60 grow slowly along the direction of the node normal $\underline{n_n}$ but get very close to the surface mesh 34 and so the tolerance for ending the iteration need only be small. When the relaxation factor $\lambda$ is closer to 1 the spheres 60 grow quickly but the tolerance may need to be larger since the surface 62 of the sphere 60 will not be guaranteed to be at or very close to the surface mesh 34 after a number of iterations. Also, when the relaxation factor $\lambda$ is closer to 1, the method of the present invention may stop iterating when a saddle point is reached rather than when a node 46 or element 48 on another surface mesh 34 is reached. The tolerance may be implemented by setting the difference D to zero if the difference D is less than or equal to the pre-determined tolerance value. In applications of the present invention it is preferred to set the increment factor or relaxation factor $\lambda$ to an intermediate value such as 0.5.

Thus when the centre point 64 is incremented by a defined, constant increment factor $\lambda$, the incrementing strategy is not guaranteed to converge to a single point but instead may converge to an oscillation between two points that straddle a saddle point.

An alternative aspect of the third sub-step of the third step of the method of the present invention is to set the increment factor $\lambda$ close to one initially. For each iteration of the method, the increment factor $\lambda$ is reduced towards zero. This aspect therefore uses successive over-relaxation of the increment factor $\lambda$ to improve the probability of convergence.

Although the method of the present invention has been described with respect to geometric components 42, such as gas turbine engine 10 components, and to animation objects 74, such as the illustrated dinosaur, the method is also applicable in other engineering disciplines where component design and analysis is conducted. For example, it finds utility in technical fields such as automobile engineering, ship building, aircraft engineering, nuclear engineering, and in the oil and gas industries.

**Claims**

1. A method of generating a medial mesh (70) of an object (42), the object (42) having an interior; the method comprising steps to:

a) obtain a surface mesh (34) of the object (42) comprising elements (48) whose vertices are nodes (46);
b) define a set of node normal vectors ($\underline{n_n}$), each node normal ($\underline{n_n}$) having its origin at a node (46) and being directed towards the interior of the object (42);
c) for each node (46):

i. select a node normal ($\underline{n_n}$) from the set of node normals ($\underline{n_n}$) having their origins at that node (46);
ii. define a sphere (60) wherein a surface (62) of the sphere (60) includes the node (46) and wherein a centre point (64) of the sphere (60) is positioned at a scalar multiple (58) of the node normal ($n_n$);

iii. increment the centre point (64) along the scalar multiple (58) of the node normal ($n_n$);
iv. iterate steps ii and iii until the surface (62) of the sphere (60) includes another node (46) or element (48);
v. record the centre point (64) of the sphere (60) as a medial point (66) and the diameter of the sphere (60) as a thickness (68);
vi. repeat steps i to v for each node normal ($n_n$) from the set of node normals ($n_n$) having their origins at that node (46); and

d) generate a medial mesh (70) from the set of medial points (66) and record object thickness from the set of thicknesses (68).

2. A method as claimed in claim 1 comprising a further step to:

a) manipulate the medial mesh (70).

3. A method as claimed in claim 1 or 2 comprising a further step to:

a) recreate the surface mesh (34) or the object geometry from the medial mesh (70) and the object thickness (68).

4. A method as claimed in any preceding claim wherein step 1.c) is performed in parallel for at least a subset of the nodes (46).

5. A method as claimed in any preceding claim wherein the surface mesh (34) is at least partially disjointed or is at least partially non-conformal.

6. A method as claimed in any preceding claim wherein step 1.a) includes determining element normals ($n_e$) directed outside the object (42) and wherein each node normal ($n_n$) is parallel to an element normal ($n_e$) and is directed towards the interior of the object (42).

7. A method as claimed in any preceding claim comprising a further step to set the number of node normals ($n_n$) such that:

- a surface node (46s) comprises one node normal ($n_n$);
- an edge node (46e) comprises two node normals ($n_n$); and
- a vertex node (46c) comprises three node normals ($n_n$).

8. A method as claimed in claim 7 comprising a further step to classify the edge nodes (46e) and vertex nodes (46c) such that:

- an edge node (46e) or vertex node (46c) for which all the node normals ($n_n$) cross in the interior of the object (42) is a convex node (50);
- an edge node (46e) or vertex node (46c) for which all the node normals ($n_n$) cross outside the object (42) is a concave node (52); and
- a vertex node (46c) for which two of the node normals ($n_n$) cross in the interior of the object (42) and two of the node normals ($n_n$) cross outside the object (42) is a convex-concave node (54).

9. A method as claimed in claim 7 or 8 wherein for each edge node (46e) or vertex node (46c), step 1.c) further comprises steps between step 1.c)iv and step 1.c)v to:

vii. increment the centre point (64) position further along the scalar multiple (58) of the node normal ($n_n$);
viii. project a new node (46) from the centre point (64) position to a nearest surface mesh element;
ix. perform steps 1.c)ii to 1.c)iv from the new node (46); and
x. iterate steps vii to ix until a sphere (60) maximal diameter is found.

10. A method as claimed in any preceding claim wherein step 1.c)iii comprises steps to:

a) calculate a distance (d) between the centre point (64) and a nearest surface mesh element (48);
b) sum the distance (d) calculated and the previous radius (r);
c) halve the sum; and
d) set the result as a new radius (r).

11. A method as claimed in any preceding claim wherein step 1.c)iv comprises iterating until the surface (62) of the sphere (60) is within a tolerance threshold of including another node (46) or element (48).

12. A method as claimed in any preceding claim wherein the object (42) comprises any one of the group comprising: a component; a subsystem; a gas turbine engine (10); an animation object (74).

13. A method as claimed in any preceding claim wherein step 1.a) comprises deriving the surface mesh (42) from the object or looking up the surface mesh (42) from a reference source.

14. A computer program having instructions adapted to carry out the method according to any preceding claim.

15. A computer readable medium, having a computer program recorded thereon, wherein the computer program is adapted to make the computer execute the method according to any of claims 1 to 13.

FIG. 1

FIG. 2

FIG. 3

FIG. 4

FIG. 5

FIG. 6

50

56

52

54

✧ Concave Node

☆ Convex-Concave Node

✿ Convex Node

FIG. 7

34

58    $n_n$

34

46

34

z
y  x

FIG. 8

FIG. 9

FIG. 10

FIG. 11

FIG. 12

88

86

84

34

60

64

58

46

34

$n_n$

34

80

82

FIG. 13

42

Protrusions

Blend

Notches

72

Chamfer

Fillet

Steps

FIG. 14

(a) Aspect ratio >=20           (b) Aspect ratio >=2

FIG. 15

FIG. 16

FIG. 17